# DEMANDE DE BREVET EUROPEEN

(11) **EP 2 644 021 A1**
(43) Date de publication de la demande: **02.10.2013**
(21) Numéro de dépôt: 13305376.9
(22) Date de dépôt: 27.03.2013
(51) Int. Cl.: A01G 13/02

(54) **Films en matière plastique à usage de plantations agricoles**

(30) Priorité: 30.03.2012 FR 1252885
(71) Demandeur: Societe d'Extrusion du Polyethylene A. Barbier & Cie, 43600 Sainte-Sigolene (FR)
(72) Inventeur: Baralon, Loïc, 43600 Sainte-Sigolène (FR); Pichon, Gérard, 42120 Monistrol sur Loire (FR); Moreno, Serge, 43210 Bas en Basset (FR)
(74) Mandataire: Cabinet Laurent & Charras

(57) **Abrégé**

Le film de paillage comprend transversalement cinq parties distinctes successives avec une partie centrale (P1) qui est vierge de toutes fentes, empreintes, marques ou déformations, de part et d'autre de celle-ci, une partie (P2) (P3) qui est susceptible de recevoir des zones (Z1) présentant chacune une multiplicité de fentes (3) et disposées en superposition de la zone du semis lors du déroulement en automatique du dit film de paillage. Les parties d'extrémité (P4) (P5) du film sont destinées à être en tout ou partie de leur largeur enterrées pour assurer la stabilité au vent et le lestage du film. Les parties (P2) (P3) situées de part et d'autre de la partie centrale (P1) sont agencées avec une pluralité de zones successives (Z1) qui comprennent elles-mêmes plusieurs fentes (3). Il comprend à l'endroit et dans la zone (Z1) (Z2)......(Zn) de chaque semence dans la terre une pluralité de fentes (3) qui, en l'état d'embobinage du film sur un mandrin, sont ouvertes mais fermées par leurs lèvres (3a) en regard venant bord à bord et qui, après pose par une machine, sont toutes ouvertes par élargissement avec des zones de tension reliant les fentes entre elles sans nécessiter de passage forcé des plants lors de leur pousse et de déchirement. Chaque zone comprend une pluralité de fentes très proches les unes des autres, une fente permettant le passage de la pousse du plant et les autres fentes, tout autour ou adjacentes, dans la zone considérée étant ouvertes autorisant et assurant une fonction de ventilation autour de la fente réceptrice de la pousse du plant. Entre les fentes «ouvertes», les zones de tension sont constituées par des plis de mise en tension du film de par la traction exercée et de rigidification.

## Description

L'invention se rattache au secteur technique des films, couvertures, paillages, bâchages, utilisés en plantations agricoles pour la culture de produits tels que le maïs, et autres légumes et céréales susceptibles d'avoir une croissance et un développement en hauteur.

Il est bien connu d'utiliser des films de paillage ou de bâchage à plat en matériau plastique, du type polyéthylène, qui sont susceptibles de couvrir des surfaces de terrains cultivées sur de très grandes longueurs, plusieurs centaines de mètres, les films étant déposés à l'aide de machines spécifiques. Les films de paillage ou de bâchage à plat ont pour but notamment de protéger les semences jusqu'à éclosion et formation de tiges susceptibles de se développer en hauteur en vue de l'obtention du produit final ainsi cultivé. Ces films sont agencés avec des fentes prédécoupées qui forment ainsi des amorces de rupture et de déchirement lorsque la tige du produit cultivé vient en contact avec la paroi intérieure du film en provoquant un effet de forçage induisant le déchirement de la fente et donc le passage du plant. Ces fentes sont disposées sur la surface du film en présentant des configurations de formes variées.

Cela est décrit, par exemple, dans le brevet US 3955319 pour un film de paillage agencé avec une multiplicité de fentes prédécoupées à déchirement qui sont forcées et déchirées par la pousse des plants.

Le Demandeur a ainsi lui-même développé un film de ce genre décrit dans le brevet français FR 2 964 300.

D'autres documents de l'art antérieur font référence à cette technologie, par exemple US 3 955 319, US 3 384 993, FR 2 568 447, US 1 553 035, US 3 805 446.

La problématique posée à l'origine de la présente demande vise d'une part à protéger les semences d'un environnement extérieur et faciliter la pousse, et d'autre part, d'éviter un phénomène de brûlage des semences qui sont sous le film et dans un milieu ambiant de température élevée. Les différents documents préalablement cités ne répondent pas ou que partiellement à cette problématique de par la conception des fentes qui sont exclusivement prédécoupées.

En d'autres termes, si à certains endroits de fentes il n'y a pas d'effet de pression et de déchirure d'une ou de plusieurs fentes, la ou les zone(s) entourant la ou les fentes précitée(s) reste(nt) fermée(s) et quasiment étanche(s).

Il est connu aussi de réaliser des ouvertures cylindriques sur le film qui sont disposées sur la surface du film. Ces ouvertures sont de très petits diamètres, de l'ordre de 2 à 5 mm selon l'art antérieur, et elles sont disposées avec un certain éloignement les unes des autres, de sorte que la partie semence n'est pas affectée et soumise à une éventuelle ventilation.

Il est connu par le brevet US 3 805 446 de disposer des fentes prédécoupées à déchirement selon des bandes longitudinales présentant des ensembles de plusieurs fentes dans le sens longitudinal de déroulement du film, et ce, pour assurer exclusivement une fonction de contrôle de l'herbicide disposé sous le film. Ces fentes sont prédécoupées exclusivement.

La démarche du Demandeur a donc été de réfléchir à une optimisation dans la fabrication du film de paillage présentant une pluralité de fentes permettant le passage de pousses et plants obtenus à partir de semences préalablement disposées par une machine permettant la culture sur une grande surface.

La démarche du Demandeur a été de créer un film de paillage à usage agricole qui puisse, par ses propriétés et sa conception, être distribué par une machine du type connu sous la dénomination `plastisemeuse' et qui, après pose, offre la particularité de permettre d'une part la pousse et le passage des plants à l'extérieur du film tout en assurant un contrôle optimisé de la température sous le film.

La solution apportée par le Demandeur répond à ces objectifs grâce à une mise en oeuvre particulière de sélection de la configuration des fentes dans leur disposition et dans leur fonctionnalité les unes par rapport aux autres et par rapport à chaque semence.

Selon une première caractéristique de l'invention, le film de paillage en matière plastique, notamment en polyéthylène, et présentant des fentes de passage lors de la pousse des plants, est remarquable ce qu'il comprend transversalement cinq parties distinctes successives avec une partie centrale qui est vierge de toutes fentes, empreintes, marques ou déformations, de part et d'autre de celle-ci, une partie qui est susceptible de recevoir des zones présentant chacune une multiplicité de fentes et disposées en superposition de la zone du semis lors du déroulement en automatique du dit film de paillage, et en ce que les parties d'extrémité du film sont destinées à être en tout ou partie de leur largeur enterrées pour assurer la stabilité au vent et le lestage du film, et en ce que les parties situées de part et d'autre de la partie centrale sont agencées avec une pluralité de zones successives qui comprennent elles-mêmes plusieurs fentes, et en ce qu'il comprend à l'endroit et dans la zone de chaque semence dans la terre une pluralité de fentes qui, en l'état d'embobinage du film sur un mandrin, sont ouvertes mais fermées par leurs lèvres en regard venant bord à bord et qui, après pose par une machine, sont toutes ouvertes par élargissement avec des zones de tension reliant les fentes entre elles sans nécessiter de passage forcé des plants lors de leur pousse et de déchirement, et en ce que chaque zone comprend une pluralité de fentes très proches les unes des autres, une fente permettant le passage de la pousse du plant et les autres fentes, tout autour ou adjacentes, dans la zone considérée étant ouvertes autorisant et assurant une fonction de ventilation autour de la fente réceptrice de la pousse du plant, et en ce qu'entre les fentes «ouvertes», les zones de tension sont constituées par des plis de mise en tension du film de par la traction exercée et de rigidification.

En d'autres termes, et selon l'invention, la configuration du film avec la pluralité de zones de fentes, dont une sert au passage de la pousse du plant et les autres pour la ventilation, est étroitement liée avec la distribution des semences par la machine du type plastisemeuse qui permet en automatique l'ensemencement des terres cultivées et le recouvrement de celles-ci par le film de paillage selon l'invention.

En considérant le film de paillage, objet de l'invention, et sa dépose par la machine elle-même, le dit film se trouve sous la forme d'une laize d'une certaine largeur avec deux bandes parallèles agencées par une succession de zones comprenant chacune une pluralité de fentes, les dites bandes étant séparées entre elles par une zone vierge de toutes fentes, le dit film présentant le long de ses bordures longitudinales des parties vierges de fentes destinées à être recouvrées de terre après ensemencement et pose du film plastique.

Ces caractéristiques et d'autres encore ressortiront bien de la suite de la description.

Pour fixer l'objet de l'invention illustré d'une manière non limitative aux figures des dessins où :

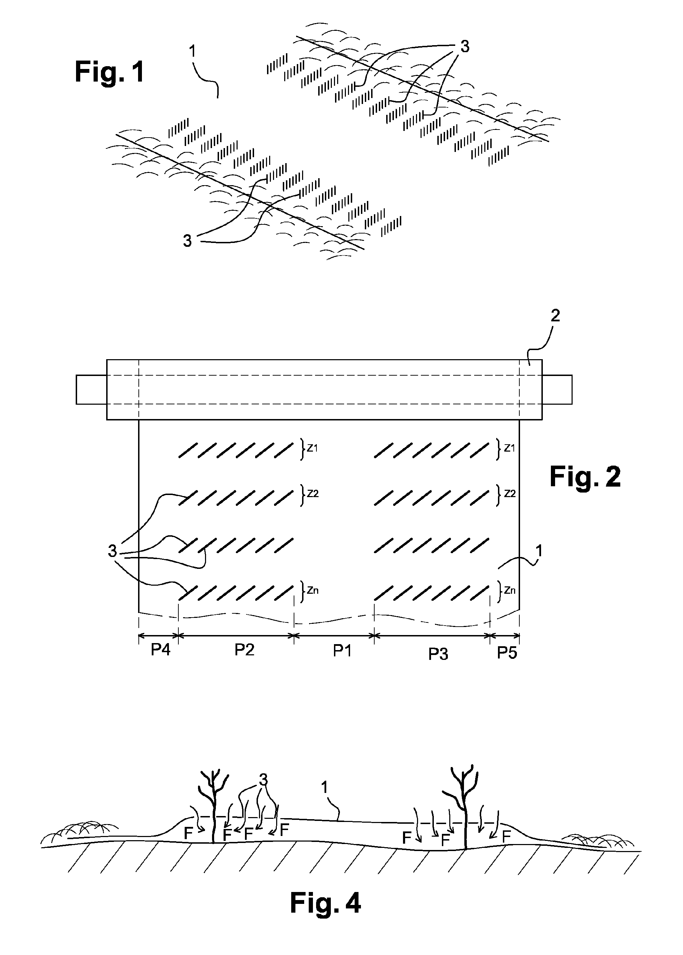

La figure 1 est une vue en perspective à grande échelle d'un film de paillage agencé près de ses bordures avec des zones comprenant une pluralité de fentes, le film étant en position sur la terre cultivée, les fentes étant ouvertes,
La figure 2 est une vue d'une bobine de film de paillage selon l'invention enroulé sur un mandrin, le film étant légèrement déroulé pour faire apparaître la configuration initiale des dites fentes, en position non ouvertes,

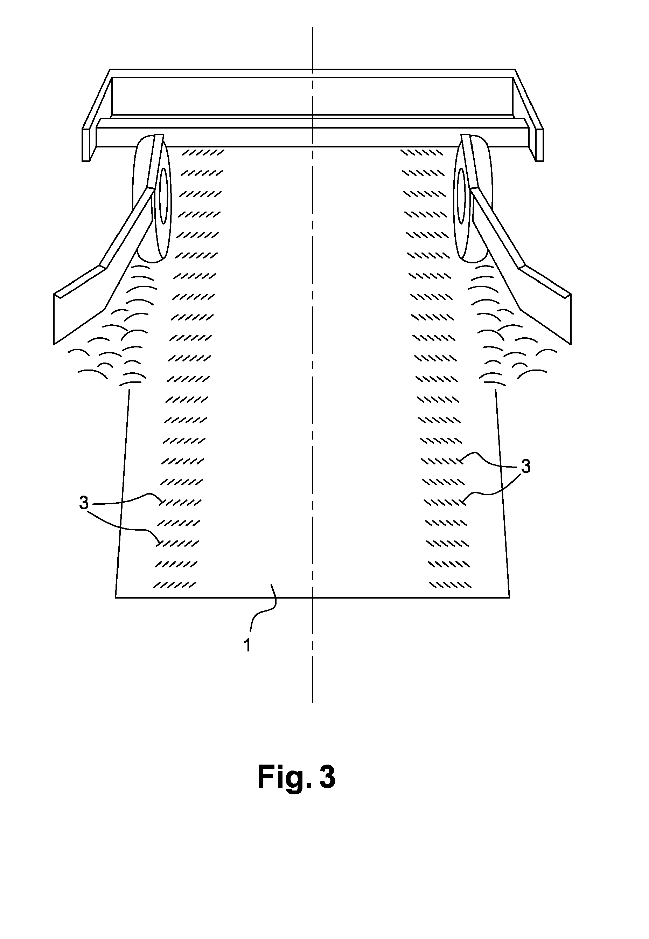

La figure 3 est une vue de dessus à caractère schématique illustrant la pose du film de paillage selon l'invention à partir d'une machine permettant un déroulement automatique du dit film,
La figure 4 est une vue partielle en coupe transversale illustrant le film de paillage positionné en terre avec la représentation d'une pousse de plant traversant le dit film et représentant la ventilation obtenue générée par les fentes non utilisées,
La figure 5 est une vue à caractère schématique illustrant dans une première mise en oeuvre l'orientation des fentes sur le paillage, avec un dimensionnement donné à titre d'exemple,
La figure 6 est une vue à caractère schématique illustrant dans une seconde mise en oeuvre l'orientation des fentes sur le paillage, avec un dimensionnement donné à titre d'exemple.

Afin de rendre plus concret l'objet de l'invention, on le décrit maintenant d'une manière non limitative illustré aux figures des dessins.

Le film de paillage ou de bâchage à plat est référencé dans son ensemble par (1). Il est réalisé en matière plastique, notamment polyéthylène, et il est enroulé préalablement lors de sa fabrication sur un mandrin support (2). La largeur du film (11) est par exemple de 1 400 mm, la longueur du mandrin est par exemple de 1 550 mm.

Selon l'invention, le film de paillage comprend transversalement cinq parties distinctes successives avec une partie centrale (P1) qui est vierge de toutes fentes, empreintes, marques ou déformations, de part et d'autre de celle-ci, une partie (P2) (P3) qui est susceptible de recevoir des zones (Z1) présentant chacune une multiplicité de fentes (3) et disposées en superposition de la zone du semis lors du déroulement en automatique du dit film de paillage. Les parties d'extrémité (P4) (P5) du film sont destinées à être en tout ou partie de leur largeur enterrées pour assurer la stabilité au vent et le lestage du film.

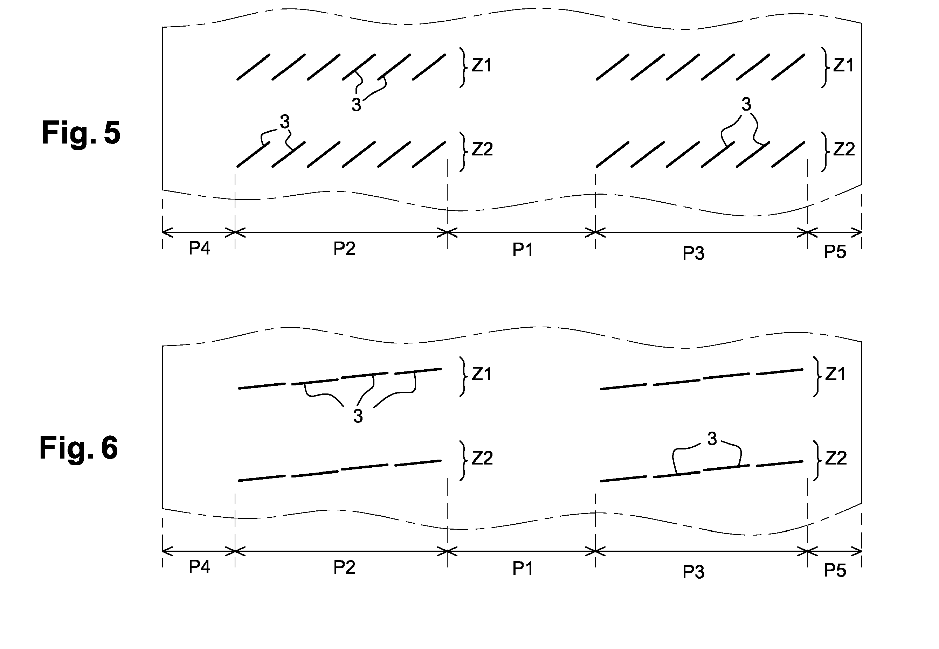

Les parties (P2) (P3) situées de part et d'autre de la partie centrale (P1) sont agencées avec une pluralité de zones successives (Z1) qui comprennent elles-mêmes plusieurs fentes disposées et orientées de manière spécifique. Ces fentes sont ouvertes lors de la fabrication du film de paillage, c'est-à-dire qu'il n'y a pas de prédécoupe à déchirement, mais les différentes fentes sont fermées par leurs lèvres (3a) en regard qui viennent bord à bord. La mise en tension du film lors de sa pose par la machine en question dénommée par exemple 'plastisemeuse' génère une action sur le film de paillage en provoquant un élargissement de l'ensemble des fentes à travers leurs ouvertures initiales précitées pour générer un passage. En d'autres termes, lesdites fentes ouvertes n'impliquent aucun passage forcé et déchirement lors de la pousse des plants. Entre les fentes 'ouvertes', les zones de tension sont constituées par des plis de mise en tension du film de part la traction exercée et de rigidification. Les dites fentes, sont, selon l'invention, regroupées en une pluralité de zones successives (Z1) (Z2) .....(Zn) disposées dans le sens longitudinal du film. Ces zones successives se trouvent être dans les parties (P2) (P3) précitées. Chaque zone (Z1) (Z2) ..... (Zn) comprend une pluralité de fentes (3) dans un espace (e)très réduit. Dans la configuration représentée aux figures 5 et 6, ces fentes (3) sont avantageusement disposées dans un plan perpendiculaire au sens de déroulement du film du paillage selon les flèches (F) et sont disposées selon un angle ∞ d'inclinaison de l'ordre de 45°. On a ainsi représenté un ensemble de six fentes parallèles et décalées les unes par rapport aux autres dans la largeur des parties (P2) (P3). La longueur de chaque fente est de l'ordre de 25mm. La distance entre deux zones successives de fentes est de l'ordre de 50 mm. La surface couverte par chacune des zones de fentes est de l'ordre de 100 mm. Dans la représentation, figure 6, les fentes ont une inclinaison ∞de l'ordre de 15° et elles sont disposées sensiblement en alignement ou avec un léger décalage pour permettre un renforcement du film à cet endroit. La longueur des fentes est de l'ordre de 20 mm, la distance entre deux séries de fentes successives est de l'ordre de 65 mm. La surface couverte par les fentes dans les zones (P2) (P3) est de l'ordre de 110 mm. La partie centrale (P1) présente une largeur de l'ordre de 650 à 640 mm en fonction de l'une des deux configurations choisies. La zone centrale (P1) peut comporter en option une ou deux rangée(s) de trous de diamètre de 6 à 10 mm espacés tous les 250 à 500 mm dans le sens de la longueur pour évacuer l'eau qui viendrait à stagner entre les zones (P2) (P3) munies de fentes. Sans sortir du cadre de l'invention, on peut bien entendu moduler ses dimensionnements en tenant compte des contraintes données par la machine.

Selon l'invention, les zones (Z1) (Z2).....(Zn) ainsi constituées présentant des fentes sont déposées par la machine lors du déroulement du film au-dessus du semis réalisé. Dans la configuration donnée et décrite, la machine distribue de semences selon deux bandes parallèles espacées correspondant aux parties (P2) (P3) avec ainsi deux semis.

Le film ainsi réalisé selon l'invention, avec une pluralité de zones (Z1) (Z2).....(Zn) et chaque zone avec une pluralité de fentes, permet d'assurer dans des meilleures conditions une double fonction, à savoir protection des semences et possibilité pour chaque plant semé avec sa pousse de passer à travers l'une des fentes d'une zone donnée sans effort de forçage provoquant une déchirure, l'autre fonction étant assurée par les autres fentes adjacentes et environnantes à celles permettant le passage de la pousse du plant pour créer un effet de ventilation autour de cette dernière. Dans l'hypothèse où une pousse de plant viendrait à se trouver entre deux zones successives adjacentes, la pousse du plant viendrait naturellement dans la fente la plus près et c'est l'ensemble des deux zones successives qui assurerait la ventilation de la pousse du plan.

Cette disposition selon l'invention est particulièrement avantageuse et permet d'avoir un film ayant une structure de fentes optimisée répondant à la problématique rappelée précédemment à l'origine de l'invention. Le positionnement, les dimensions et l'orientation des fentes sont ajustables en fonction du type de culture.

Les avantages ressortent bien de l'invention à savoir :
D'une part, faciliter le passage au travers du film de paillage des plants (obtenus par semis en pleine terre de semences ou par repiquage) lors de leur croissance par l'une des fentes.

Le film garde alors toute son intégrité sur le reste de la surface non perforée.
- rétention de l'humidité des sols,
- limitation du lessivage des engrais et amendements,
- effet herbistatique pour les films noirs ou colorés donc limitation des traitements herbicides,
- effet thermique nocturne pour les films incolores en retenant la chaleur emmagasinée le jour,
- meilleure reprise des plans ou semis,
- limitation des manques de levées,
- amélioration des rendements et meilleur aspects sanitaires des cultures.

D'autre part, permettre par les autres fentes restantes d'une même zone une ventilation suffisante sous le film en réduisant les pics de température sous le film pendant la période diurne et en assurant la ventilation autour de la fente réceptrice du plant.
- limitation des risques de stress thermique que peuvent subir les très jeunes plants lorsqu'ils sortent de terre tout en étant encore sous le film. Il est à noter que si ce stress thermique est trop important cela peut induire soit un retard de croissance, soit une destruction partielle ou totale.
- limitation du stress voir les risques de brûlures si le plant vient en contact avec la surface du film.

Selon une disposition importante de l'invention, le mandrin sur lequel est enroulée la bobine de paillage est d'une dimension plus importante que la bobine elle-même. Cela permet de positionner sur la machine les moyens nécessaires, d'une part de roulement sur les bordures (P4) (P5) du film de paillage, et d'autre part le remblaiement de terre pour recouvrir les parties (P4) (P5) après pose du semis et pose du film de paillage, cela dans un automatisme de fonctionnement. Il convient donc bien entendu d'adapter sur la machine les moyens de distribution des semences par rapport à l'emplacement des parties (P2) (P3) du dit film, réceptrices des zones incluant les fentes.

## Revendications

1. Film de paillage en matière plastique, notamment en polyéthylène, et présentant des fentes de passage lors de la pousse des plants, **caractérisé en ce qu'il** comprend transversalement cinq parties distinctes successives avec une partie centrale (P1) qui est vierge de toutes fentes, empreintes, marques ou déformations, de part et d'autre de celle-ci, une partie (P2) (P3) qui est susceptible de recevoir des zones (Z1) présentant chacune une multiplicité de fentes (3) et disposées en superposition de la zone du semis lors du déroulement en automatique du dit film de paillage, et **en ce que** les parties d'extrémité (P4) (P5) du film sont destinées à être en tout ou partie de leur largeur enterrées pour assurer la stabilité au vent et le lestage du film, et **en ce que** les parties (P2) (P3) situées de part et d'autre de la partie centrale (P1) sont agencées avec une pluralité de zones successives (Z1) qui comprennent elles-mêmes plusieurs fentes (3), et **en ce qu'**il comprend à l'endroit et dans la zone (Z1) (Z2).....(Zn) de chaque semence dans la terre une pluralité de fentes (3) qui, en l'état d'embobinage du film sur un mandrin, sont ouvertes mais fermées par leurs lèvres (3a) en regard venant bord à bord et qui, après pose par une machine, sont toutes ouvertes par élargissement avec des zones de tension reliant les fentes entre elles sans nécessiter de passage forcé des plants lors de leur pousse et de déchirement, et **en ce que** chaque zone comprend une pluralité de fentes très proches les unes des autres, une fente permettant le passage de la pousse du plant et les autres fentes, tout autour ou adjacentes, dans la zone considérée étant ouvertes autorisant et assurant une fonction de ventilation autour de la fente réceptrice de la pousse du plant, et **en ce qu'**entre les fentes «ouvertes», les zones de tension sont constituées par des plis de mise en tension du film de par la traction exercée et de rigidification.

2. Film de paillage selon la revendication 1, **caractérisé en ce que** les fentes (3) sont disposées dans un plan perpendiculaire au sens de déroulement du film du paillage, et sont disposées selon un angle ∞ d'inclinaison de l'ordre de 45°.

3. Film de paillage selon la revendication 2, **caractérisé en ce que** la longueur de chaque fente est de l'ordre de 25mm, la distance entre deux zones successives de fentes est de l'ordre de 50 mm, la surface couverte par chacune des zones de fentes est de l'ordre de 100 mm.

4. Film de paillage selon la revendication 1, **caractérisé en ce que** les fentes ont une inclinaison ∞ de l'ordre de 15° et elles sont disposées sensiblement en alignement ou avec un léger décalage pour permettre un renforcement du film à cet endroit, et **en ce que** la longueur des fentes est de l'ordre de 20 mm, la distance entre deux séries de fentes successives est de l'ordre de 65 mm, la surface couverte par les fentes dans les zones (P2) (P3) est de l'ordre de 110 mm.

5. Film de paillage selon la revendication 1, **caractérisé en ce que** la zone centrale (P1) comporte une ou deux rangée(s) de trous de diamètre de 6 à 10 mm espacés tous les 250 à 500 mm dans le sens de la longueur pour évacuer l'eau qui viendrait à stagner entre les deux zones (P2) (P3) munies de fentes.
